# EUROPÄISCHE PATENTSCHRIFT

(11) **EP 4 483 080 B1**
(45) Veröffentlichungstag und Bekanntmachung des Hinweises auf die Patenterteilung: **30.07.2025**
(21) Anmeldenummer: 23725241.6
(22) Anmeldetag: 10.05.2023
(51) Int. Cl.: F16J 15/3204, F16J 15/3208, F16J 15/3212, F16J 15/3244

(54) **WELLENDICHTRING UND WELLENANORDNUNG FÜR HOHE UMLAUFGESCHWINDIGKEITEN**
SHAFT SEALING RING AND SHAFT ARRANGEMENT FOR HIGH ROTATIONAL SPEEDS
BAGUE D'ÉTANCHÉITÉ D'ARBRE ET AGENCEMENT D'ARBRE POUR VITESSES DE ROTATION ÉLEVÉES

(30) Priorität: 11.05.2022 DE 102022111844
(43) Veröffentlichungstag der Anmeldung: 01.01.2025
(73) Patentinhaber: Trelleborg Sealing Solutions Germany GmbH, 70565 Stuttgart (DE)
(72) Erfinder: DAKOV, Nino, 70193 Stuttgart (DE); FRANZ, Martin, 72827 Wannweil (DE); BAUER, Peter, 70178 Stuttgart (DE); SCHIEFER, Felix, 70567 Stuttgart (DE)
(74) Vertreter: Kohler Schmid Möbus Patentanwälte
(86) Internationale Anmeldenummer: PCT/EP2023/062487
(87) Internationale Veröffentlichungsnummer: WO 2023/217896

(56) Entgegenhaltungen:
- CN-A- 112 747 117
- DE-A1- 2 757 523
- DE-U- 7 016 392
- JP-A- 2001 295 942
- JP-A- 2003 035 371
- JP-A- 2005 273 691

## Beschreibung

Die Erfindung betrifft einen Wellendichtring gemäß Oberbegriff von Anspruch 1 und eine Wellenanordnung für hohe Umlaufgeschwindigkeiten. Ein derartiger Wellendichtring ist beispielsweise aus DE 70 16 392 U bekannt geworden.

Wellenanordnungen werden in der Praxis häufig für Antriebe von Fahrzeugen sowie bei Elektrowerkzeugen, Werkzeugmaschinen und dergleichen eingesetzt. Zum Abdichten eines Dichtspalts (= Lagerspalts) zwischen den relativ zueinander bewegbaren Maschinenteilen werden in der Regel ein oder mehrere Wellendichtringe eingesetzt. Die jeweilig maximal zulässige Umlaufgeschwindigkeit der vom Wellendichtring gegeneinander abzudichtenden Maschinenteile hängt unter anderem vom Material des Wellendichtrings, den abzudichtenden Betriebsdrücken sowie der Art und dem Umfang der Schmierung des dynamischen Dichtabschnitts des Wellendichtrings ab. Dabei können bekanntermaßen Wellendichtringe aus FKM (= Fluorkautschuk) grundsätzlich bei größeren Drehzahlen eingesetzt werden, als etwa Wellendichtringe aus NBR (Nitril-Butadien-Kautschuk).

In der Praxis wird zwecks einer möglichst geringen thermischen und mechanischen Belastung des Wellendichtrings versucht, die Schmierung im Bereich der Kontaktzone seines dynamischen Dichtabschnitts mit der Dicht- bzw. Gegenlauffläche zu optimieren. Ein hier verfolgter Ansatz ist, den Dichtabschnitt des Wellendichtrings bzw. daran angrenzende Strukturen mit tribologischen Mikro- bzw. Makrostrukturen zu versehen.

Der aus DE 70 16 392 U bekannte Wellendichtring umfasst eine Umfangsdichtungslippe mit einem sich über den Umfang erstreckenden Dichtungsband zwischen einer inneren und einer äußeren kegelstumpfförmigen Fläche, die im Betrieb der Dichtung der abgedichteten Flüssigkeit zu- bzw. abgekehrt sind. Die äußere kegelstumpfförmige Fläche ist mit Leitflächenteilen versehen, die jeweils die Oberfläche einer Rippe oder Rille bilden, die schräg auf das Dichtungsband auftreffen. Wenigstens zwei dieser Leitflächenteile treffen jeweils auf das Dichtungsband in entgegengesetzten Umfangsrichtungen in einem Winkel von nicht mehr als 20° zur Ebene des Dichtungsbandes auf. Die Leitflächenteile weisen zwei sich schneidende, entgegengesetzt gerichtete Gruppen schraubenliniger Rippen auf, die an der äußeren kegelstumpfförmigen Fläche der Dichtung ausgebildet sind. Die Rippen jeder Gruppe verlaufen miteinander parallel, und der Schraubenwinkel, d.h. der Winkel, mit dem die Rippen auf das Dichtungsband treffen, ist bei beiden Rippengruppen gleich groß und entgegengesetzt gerichtet.

Aus der US 4 118 856 A ist beispielsweise bekannt, den Dichtabschnitt mit bidirektional wirkenden Tribostrukturen in Form von rippen- bzw. stegartigen Materialvorsprüngen zu versehen, die einander kreuzen. Derlei Tribostrukturen unterliegen aufgrund ihrer Bauart allerdings gerade bei Hochgeschwindigkeitsanwendungen oftmals einem erheblichen mechanischen Verschleiß, was für die Standzeit des Wellendichtrings ungünstig ist.

Eine für hohe Drehzahlen ebenfalls eher ungeeignete Profilierung des Dichtabschnitts eines Wellendichtrings ist aus der US 20070187904 A1 bekannt. Der Dichtabschnitt ist hier mit zueinander parallelen oder relativ zueinander schräg verlaufenden und einander kreuzenden, mithin fluidisch verbundenen und z. T. blind endenden, Kanälen mit einheitlichem Strömungsquerschnitt versehen. Eine vergleichbare Profilierung der Lauffläche des Dichtabschnitts ist aus der DE 101 09 320 A1 bekannt.

Ein Radialwellendichtring, dessen Dichtabschnitt zur Medienrückförderung mit einer ringförmig umlaufenden Nut versehen ist, ist in EP 0 798 498 offenbart. Auf dem Grund der Nut ist eine radial nach innen vorspringende, hydrodynamisch wirkende Rückfördereinrichtung, die durch eine in Umfangsrichtung verlaufende Wellung gebildet ist. Die Wellung weist ein in Richtung der abzudichtenden Medienseite keilförmig verjüngtes Innenprofil auf. Dieser Radialwellendichtring kann bei Hochgeschwindigkeitsanwendungen eingesetzt werden, weist jedoch beispielsweise bei einem größeren Anpressdruck des Wellendichtrings gegen die zugeordnete Dichtfläche ein recht limitiertes Rückfördervermögen auf.

DE 101 54 789 A1 offenbart einen weiteren Wellendichtring mit einer Dichtlippe, die einen Dichtabschnitt zur dynamisch dichtenden Anlage an einer Dichtfläche eines Maschinenteils aufweist. Der Dichtabschnitt umfasst eine Laufläche mit mehreren Profilrillen. Die Profilrillen sind in Umfangsrichtung des Wellendichtrings jeweils ringförmig geschlossen ausgeführt und in einer zur Zentralasche des Wellendichtrings axialen Richtung durch eine niederdruckseitig angeordnete erste Seitenflanke und eine hochdruck- oder medienseitig angeordnete Seitenflanke begrenzt. Die niederdruckseitig angeordnete Seitenflanke einer jeden Profilrille ist in Umfangsrichtung wellenförmig ausgeführt, während die hochdruckseitige Seitenflanke einer jeden Profilrille in Umfangsrichtung gerade, d. h. kreisförmig oder auch wellenförmig ausgeführt sein kann. Die Profilrillen gewährleisten bei Hochgeschwindigkeitsanwendungen zwar ein zuverlässiges Rückfördervermögen für in die Profilrillen gelangtes Schmiermedium. Allerdings ist auch hier das Rückfördervermögen des Wellendichtrings, insbesondere bei hohen abzudichtenden Betriebsdrücken auf der Innen- oder Medienseite des Dichtspalts, limitiert.

Es ist die Aufgabe der Erfindung, einen Wellendichtring und eine Wellenanordnung mit einem Wellendichtring anzugeben, der ein nochmals weiter verbessertes Schmierverhalten und Rückfördervermögen aufweist und der bei großen Drehzahlen, d. h. bei Hochgeschwindigkeitsanwendungen, sowie auch bei größeren abzudichtenden Betriebsdrücken eine nochmals weiter verbesserte Standzeit ermöglicht.

Die den Wellendichtring betreffende Aufgabe wird durch einen Wellendichtring mit den in Anspruch 1 angegebenen Merkmalen gelöst. Die erfindungsgemäße Wellenanordnung weist die in Anspruch 17 angegebenen Merkmale auf.

Bevorzugte Weiterbildungen der Erfindung sind in den Unteransprüchen angegeben.

Der erfindungsgemäße Wellendichtring erlaubt das Abdichten einer bedarfsweise mit einem Betriebsdruck beaufschlagbaren Innen- oder Medienseite gegenüber einer Umgebungs- oder Außenseite des Dichtspalts einer Wellenanordnung. Der Wellendichtring weist einen Dichtabschnitt auf, der sich im Montage- bzw. Betriebszustand des Wellendichtrings entlang einer Dichtachse des Wellendichtrings erstreckt und welcher eine Lauffläche zur dynamischen dichtenden Anlage an der Gegenlauffläche eines Maschinenteils der Wellenanordnung aufweist. Der Dichtabschnitt umfasst eine Lauffläche mit mehreren tribologischen Makrostrukturen in Form von Profilrillen. Die Profilrillen sind jeweils in einer zur Dichtachse des Wellendichtrings axialen Richtung voneinander beabstandet am Dichtabschnitt angeordnet und zur dynamischen Lauffläche (= Kontaktfläche) des Dichtabschnitts hin offen ausgeführt. Jede Profilrille ist durch eine im Betriebseinsatz des Wellendichtrings medienseitig angeordnete erste Kanalwand bzw. Seitenflanke sowie durch eine im Betriebseinsatz umgebungsseitig (= außenseitig bzw. auf der Niederdruckseite) angeordnete zweite Kanalwand bzw. Seitenflanke seitlich begrenzt. Die erste Seitenflanke weist in Umfangsrichtung einen geraden oder im Wesentlichen geraden Verlauf auf, d.h. ist bezüglich der Dichtachse kreisförmig ausgeführt. Die zweite Seitenflanke erstreckt sich in Umfangsrichtung des Wellendichtrings bidirektional von jedem Maximum des Strömungsquerschnitts S der Profilrille axial in Richtung auf die erste Seitenflanke zu einem Minimum des Strömungsquerschnitts. Mit anderen Worten ist die zweite Seitenflanke derart ausgeführt, dass sich der Strömungsquerschnitt abschnittsweise in Umfangsrichtung verkleinert und vergrößert. Erfindungsgemäß ist jedes Minimum des Strömungsquerschnitts einer Profilrille zu einem Maximum des Strömungsquerschnitts der jeweils nächstliegenden, insbesondere der jeweils medienseitig nächstliegenden, Profilrille in axialer Richtung fluchtend oder im Wesentlichen fluchtend angeordnet.

In einer erfindungsgemäßen Alternative variiert die Nuttiefe der Profilrille oder der Flankenverlauf einer in Richtung auf die Hochdruckseite bzw. auf die hochdruckseitige Nutflanke gerichteten, niederdruckseitigen Nutflanke der Profilrille in Umfangsrichtung der Profilrille, insbesondere periodisch, um in der Profilrille abwechselnd Maxima und Minima des Strömungsquerschnitts auszubilden. Die niederdruckseitige Nutflanke kann beispielsweise schräg oder gerundet verlaufen.

Dadurch, dass ein Minimum des Strömungsquerschnitts einer Profilrille in axialer Richtung jeweils mit einem Maximum der medienseitig jeweils nächstliegend angeordneten Profilrille in axialer Richtung fluchtet, kann zwischen diesen beiden Abschnitten jeweils ein schmales Laufflächensegment angeordnet sein. In dazu korrespondierender Weise kann zwischen dem Maximum des Strömungsquerschnitts einer Profilrille und dem Minimum des Strömungsquerschnitts der medienseitig nächstliegenden Profilrille ein (in Richtung der Dichtachse) breites Laufflächensegment ausgebildet sein. Im Betriebseinsatz des Wellendichtrings kann dadurch ein ganz besonders widerstandsarmer und effizienter Rücktransport eines Schmiermittels axial in Richtung auf die Medien- bzw. Hochdruckseite H erreicht und so eine besonders wirkungsvolle Schmierung und Kühlung der Lauffläche des Dichtabschnitts gewährleistet werden. Mit anderen Worten wird das Rückschleppvermögen des Wellendichtrings weiter verbessert. Der Wellendichtring eignet sich dadurch insbesondere für die eingangs genannten Hochgeschwindigkeitsanwendungen.

Zu beachten ist darüber hinaus, dass derart über den Umfang des Wellendichtrings an jedem lokalen Querschnitt des Dichtabschnitts ein einheitlich oder im Wesentlichen einheitlich großer Laufflächenabschnitt zur dynamisch dichtenden Anlage des Dichtabschnitts an der Dicht- bzw. Gegenlauffläche der Wellenanordnung bereitgestellt werden kann. Dies ist für das statische wie auch für das dynamische Dichtvermögen des Wellendichtrings, insbesondere auch bei größeren medienseitigen Betriebsdrücken des abzudichtenden Schmiermediums, sowie für die Lebensdauer des Wellendichtrings von Vorteil.

Besonders bevorzugt sind die Profilrillen in Umfangsrichtung des Wellendichtrings ringförmig geschlossen ausgeführt. Dadurch kann ein Schmieren und Kühlen der Lauffläche über den gesamten Umfang gewährleistet werden. Lokalen mechanischen/thermischen Überbeanspruchungen des Wellendichtrings kann dadurch besonders zuverlässig entgegengewirkt werden.

Nach einer Weiterbildung der Erfindung kann zumindest ein Teil der Profilrillen bzw. können auch alle Profilrillen in Umfangsrichtung vollständig unterbrochen ausgeführt sein. Hierdurch kann die effektive Lauffläche des Wellendichtrings nochmals weiter vergrößert werden, was insbesondere für das Dichtvermögen des Wellendichtrings günstig ist.

Ganz besonders bevorzugt ist jedes Maximum des Strömungsquerschnitts der Profilrillen zumindest zweimal, bevorzugt zumindest dreimal, ganz besonders bevorzugt zumindest viermal so groß wie jedes Minimum des Strömungsquerschnitts. Dies ist im Betriebseinsatz für die Schmiermittel-Aufnahmekapazität der jeweiligen Profilrille sowie auch das Rückpumpvermögen (= Rückfördervermögen) des Wellendichtrings besonders günstig. Es versteht sich, dass im Falle der in Umfangsrichtung vollständig unterbrochenen Profilrillen das Minimum des Strömungsquerschnitts beidenends der Profilrille jeweils Null ist.

Nach einer bevorzugten Ausführungsform des Wellendichtrings erstreckt sich die zweite Seitenflanke zumindest eines Teils oder aller Profilrillen beiderseitig eines jeden Maximums des Strömungsquerschnitts S der jeweiligen Profilrille jeweils wendelförmig, d. h. mit konstanter Steigung in Richtung auf die erste Seitenflanke zum jeweiligen Minimum des Strömungsquerschnitts der Profilrille. Die zweite Seitenflanke ist insoweit beiderseitig eines Maximums bis zum jeweiligen Minimum der jeweiligen Profilrille in der Abwicklung gerade ausgeführt.

Nach einer alternativen Ausführungsform erstreckt sich die zweite Seitenflanke beiderseitig eines jeden Maximums des Strömungsquerschnitts der Profilrille - bezogen auf die erste Seitenflanke - konvex gekrümmt oder konkav gekrümmt in Richtung auf die erste Seitenflanke und zum jeweiligen Minimum des Strömungsquerschnitts der Profilrille. Die zweite Seitenflanke weist insoweit beiderseitig eines Maximums und der jeweiligen Minima eine inkonstante Steigung auf. Auch in der Abwicklung sind die zweiten Seitenflanken gekrümmt.

Durch diese Ausführungsform kann der Strömungsquerschnittsverlauf der Profilrille(n) auf das Strömungsverhalten des Schmiermediums sowie die relative Umlaufgeschwindigkeit der abzudichtenden Maschinenteile ausgelegt werden, um einen für die Rückförderwirkung vorteilhafte axiale Beschleunigung/einen gewünschten Staudruck des Schmiermittels im Bereich der Minima der Profilrillen zu erreichen.

Jede Profilrille kann nach der Erfindung eine gerundete oder eine polygonale Querschnittsform bzw. eine Mischform dieser Querschnittsformen aufweisen. Dadurch können die Profilrillen optimal auf die Dicke des Dichtabschnitts bzw. einer den Dichtabschnitt bildenden Dichtlippe abgestimmt werden.

Nach einer weiteren Ausführungsform der Erfindung kann die erste und/oder die zweite Seitenflanke bezüglich der Dichtachse des Wellendichtrings zumindest abschnittsweise unterschiedliche Flankensteigungen aufweisen. Dadurch kann die lokale Materialschwächung des Dichtabschnitts durch die Profilrille minimiert und im Falle der zweiten Seitenflanke eine nochmals stärkere Rückförderwirkung des Wellendichtrings erreicht werden.

Die medienseitige bzw. hochdruckseitig angeordnete erste Seitenflanke und die umgebungsseitig angeordnete zweite Seitenflanke zumindest eines Teils der Profilrillen oder aller Profilrillen können vorzugsweise in einer radialen Richtung zur Dichtachse hin konvergieren. Mit anderen Worten können sich die Profilrillen in Richtung ihrer radialen Tiefenerstreckung verjüngen. Dadurch kann einerseits ein axial gerichtetes Rückfördern von Schmiermittel von einer Profilrille zur nächsten vereinfacht werden. Andererseits bietet dies im Falle eines als Spritzgießteil ausgebildeten Radialdichtrings fertigungstechnische Vorteile, zumal ein Entformen des Radialdichtrings dadurch vereinfacht und Fehlteile vermieden werden können. Auch kann dadurch eine Materialschwächung des Wellendichtrings im Bereich der Profilrillen minimiert werden.

Die Profilrillen können bezogen auf die Dichtachse eine radiale Tiefe aufweisen, die in Umfangsrichtung des Wellendichtrings variiert, insbesondere in einem Maximum des Strömungsquerschnitts größer ist als in einem Minimum des Strömungsquerschnitts der jeweiligen Profilrille. Dadurch kann der Strömungsquerschnitt der Profilrillen insbesondere auch bei Wellendichtringen mit kleineren Abmessungen besonders effizient eingestellt werden.

Gemäß einer Weiterbildung der Erfindung kann das axial gerichtete Rücktransportvermögen des Wellendichtrings dadurch nochmals weiter vergrößert werden, dass ein zwischen einem Minimum einer Profilrille und dem Maximum der jeweilig nächstliegenden Profilrille angeordnetes Laufflächensegment - medienbetätigt - in einer radialen und/oder axialen Richtung relativ zum übrigen Wellendichtring verformbar ist. Dadurch kann ein mechanischer Strömungswiderstand für den axial gerichteten Übertritt des Schmiermediums von einer Profilrille zur medienseitig nächstliegend angeordneten Profilrille minimiert werden.

Nach einer besonders bevorzugten Ausführungsform der Erfindung ist der Dichtabschnitt durch eine Dichtlippe des Wellendichtrings gebildet. Die Dichtlippe erstreckt sich vorzugsweise von einem Halteabschnitt des Wellendichtrings weg und ist im Einbauzustand des Wellendichtrings parallel oder im Wesentlichen parallel zur Dichtachse verlaufend angeordnet.

Der Wellendichtring kann in Abhängigkeit von seinem vorgesehenen Einsatzbereich ein zähelastisch oder ein gummielastisch verformbares Material umfassen oder aus diesem bestehen. Es versteht sich, dass der Wellendichtring eine Verstärkungseinlage (=Armierungseinlage) aufweisen kann, die vorzugsweise im oder am vorgenannten Halteabschnitt des Wellendichtrings eingebettet/angeordnet sein kann.

Der Wellendichtring kann nach der Erfindung als ein Radialwellendichtring oder als ein Axialwellendichtring ausgeführt sein. Beim Radialwellendichtring fällt die Dichtachse mit der Zentralachse des Radialwellendichtrings und im Einbauzustand mit der Bewegungsachse der abzudichtenden Maschinenteile zusammen. Beim Axialwellendichtring ist die Dichtfläche/ die Dichtachse zur Zentralachse des Axialwellendichtrings orthogonal verlaufend angeordnet.

Vorzugsweise schließt der erfindungsgemäße im Wesentlichen gerade Verlauf der ersten Seitenflanke in Umfangsrichtung eine axiale Modulation ein, deren Maximalamplitude kleiner als die halbe Maximalamplitude der zweiten Seitenflanke, insbesondere kleiner als ein Viertel der Maximalamplitude der zweiten Seitenflanke ist.

Vorzugsweise schließt die erfindungsgemäße im Wesentlichen fluchtende Anordnung eines Minimums einer Profilrille zu einem Maximum der jeweils nächstliegenden Profilrille einen Versatz in Umfangsrichtung von maximal dem halben Winkelabstand zwischen einem Minimum und einem benachbarten Maximum einer Profilrille ein. Der Versatz ermöglicht es, die Ausprägung der Rückförderwirkung zu beeinflussen Besonders bevorzugt beträgt der Versatz in Umfangsrichtung ca. ¼ des Winkelabstands zwischen einem Minimum und einem benachbarten Maximum einer Profilrille.

Für den erfindungsgemäßen Fall, dass die Nuttiefe der Profilrille oder der Flankenverlauf einer in Richtung auf die Hochdruckseite bzw. auf die hochdruckseitige Nutflanke gerichteten, niederdruckseitigen Nutflanke der Profilrille in Umfangsrichtung der Profilrille periodisch variiert, um in der Profilrille abwechselnd Maxima und Minima des Strömungsquerschnitts auszubilden, können die Profilrillen gerade und parallel nebeneinander verlaufen oder wellenförmig und parallel nebeneinander verlaufen.

Die erfindungsgemäße Wellenanordnung umfasst ein erstes Maschinenteil in Form einer Welle und ein die Welle umgreifendes zweites Maschinenteil. Das zweite Maschinenteil kann insbesondere ein Wellengehäuse sein. Die Welle und das zweite Maschinenteil sind unter Ausbildung eines Dichtspalts (= Lagerspalts) voneinander beabstandet angeordnet und um eine Drehachse relativ zueinander verstellbar.

Ein Wellendichtring dient dem Abdichten einer Medien-/Innen- oder Hochdruckseite H gegenüber einer Außen- oder Niederdruckseite N des Dichtspalts bzw. der Wellenanordnung, wobei der Wellendichtring in der vorstehend erläuterten Weise ausgebildet ist und mit seinem Dichtabschnitt an einer Dicht- bzw. Gegenlauffläche eines der beiden Maschinenteile dynamisch dichtend anliegt. Die Dicht- bzw. Gegenlauffläche ist bei einem innendichtenden Wellendichtring durch die Welle und im Falle eines außendichtenden Wellendichtrings durch das die Welle umgreifende, d. h. in radialer Richtung außenliegend angeordnete, Maschinenteil gebildet. Werden die Welle und das Maschinenteil um die Drehachse relativ zueinander bewegt, so wird dadurch ein Rückfördereffekt des Wellendichtrings bezüglich von auf die Niederdruckseite N bzw. zwischen den Dichtabschnitt und die Dichtfläche gelangtem Schmiermittel begünstigt. Das Schmiermittel wird - abgeleitet aus der relativen Rotationsbewegung der Welle und dem Maschinenteil in Umfangsrichtung entlang der Profilrille in die Verengungen der jeweiligen Profilrille gepresst und durch die zur Innen- bzw. Medienseite hin gekrümmte niederdruckseitige Seitenflanke der Profilrillen axial in Richtung der Medienseite H gefördert, wo es in die Erweiterung des Strömungsquerschnitts der hochdruckseitig jeweils nächstliegend angeordneten Profilrille gelangt. Dadurch wird die Rückpumpfunktion des Wellendichtrings axial in Richtung der Innen- oder Medienseite begünstigt. Zu beachten ist, dass der Wellendichtring aufgrund der Ausgestaltung der Profilrillen drehrichtungsunabhängig eine Rückförderfunktion für ein in den Profilrillen angeordnetes/gelangtes Schmiermittel aufweist.

Es versteht sich, dass der Wellendichtring mit seinem dynamischen Dichtabschnitt, d. h., sofern vorhanden, mit seiner Dichtlippe, mittels eines gummielastisch verformbaren Vorspannelements gegen die Dichtfläche gespannt sein kann.

Darüber hinaus kann der Wellendichtring in einer (Montage-)Kartusche angeordnet sein, mittels derer der Wellendichtring vereinfacht und ggf. mit an sich bekannten weiteren Dichtungselementen bereitgestellt und in einer Haltestruktur des Maschinenteils bzw. der Welle montiert werden kann.

Die Dichtlippe des Wellendichtrings liegt mit seiner Lauffläche an der Dichtfläche dynamisch und statisch dichtend an, d. h. mit zur Dichtfläche offenen Profilrillen.

Die Erfindung ist nachstehend anhand eines in der Zeichnung wiedergegebenen Ausführungsbeispiels näher erläutert. Die gezeigte und beschriebene Ausführungsform ist nicht als abschließende Aufzählung zu verstehen, sondern hat für die Schilderung der Erfindung vielmehr beispielhaften Charakter.

In der Zeichnung zeigen:
- Fig. 1: eine Wellenanordnung mit einer Welle und mit einem die Welle umgreifenden Maschinenteil und mit einem Wellendichtring zum Abdichten eines zwischen der Welle und dem Maschinenteil ausgebildeten Lager- bzw. Dichtspalts;
- Fig. 2: den Dichtabschnitt des Wellendichtrings gemäß Fig. 1 in einem Detailausschnitt mit Darstellung der laufflächenseitigen Profilrillen;
- Fig. 3: einen weiteren Wellendichtring in einem Detailausschnitt;
- Fig. 4: einen weiteren Wellendichtring in einem Detailausschnitt;
- Fig. 5: einen weiteren Wellendichtring in einem Detailausschnitt;
- Fig. 6: einen weiteren Wellendichtring in einem Detailausschnitt;
- Fign. 7A-7J: Profilrillen eines Wellendichtrings mit unterschiedlichen Geometrien ihres Strömungsquerschnitts;
- Fign. 8A,8B: Profilrillen eines Wellendichtrings mit variierender Nuttiefe oder mit variierendem Flankenverlaufs ihres Strömungsquerschnitts;
- Fig. 9: einen weiteren Wellendichtring in einem Detailausschnitt;
- Fign. 10A-10H: verschiedene Modulationsvarianten von Seitenflanken der Profilrillen eines Wellendichtrings;
- Fig. 11: einen weiteren Wellendichtring in einem Detailausschnitt; und
- Fign. 12A,12B: weitere Wellendichtringe in einem Detailausschnitt.

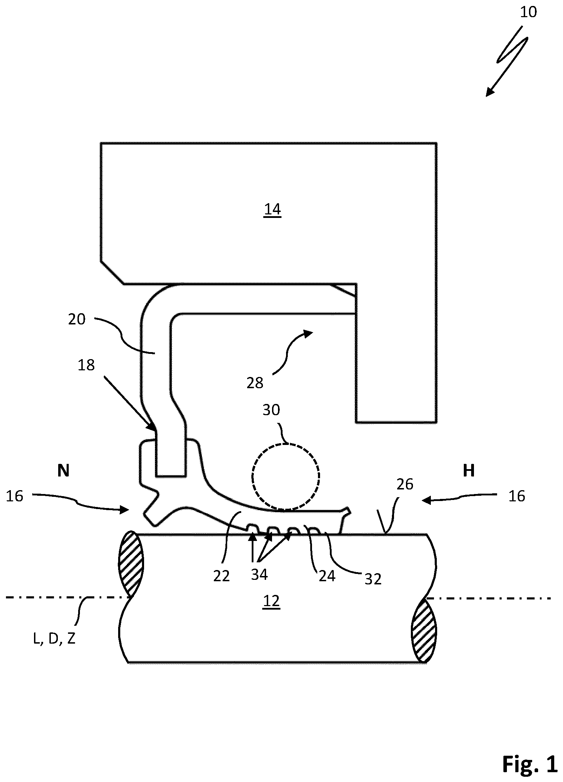

**Fig. 1** zeigt eine Wellenanordnung **10,** wie diese in vielen technischen Bereichen, beispielweise bei Antrieben von Fahrzeugen, Werkzeugmaschinen, Elektrowerkzeugen oder auch Pumpen sowie Kompressoren eingesetzt werden kann. Die Wellenanordnung 10 umfasst ein erstes Maschinenteil in Form einer Welle **12** und ein die Welle 12 umgreifendes zweites Maschinenteil **14,** das beispielsweise als ein Wellengehäuse, eine Montagekartusche oder dergleichen ausgeführt sein kann. Die Welle 12 und das Maschinenteil 14 sind unter Ausbildung eines Lager- oder Dichtspalts **16** voneinander beabstandet angeordnet und um eine mit **L** bezeichnete Drehachse relativ zueinander verstellbar.

Zum Abdichten einer Innen- oder Medienseite (bzw. Hochdruckseite) **H** des Dichtspalts 16 gegenüber einer Außenseite **N** des Dichtspalts 16 dient ein insgesamt mit **18** bezeichneter Wellendichtring. Der Wellendichtring 18 weist einen Halteabschnitt **20,** eine am Halteabschnitt 20 befestigte bzw. angeformte Dichtlippe **22** und einen durch die Dichtlippe 22 ausgebildeten Dichtabschnitt **24** auf. Die Dichtlippe 22 kann sich in einer zur Zentralachse **Z** des Wellendichtrings 18 axialen Richtung vom Halteabschnitt 20 wegerstrecken. Im gezeigten Montagezustand fällt die Zentralachse Z des Wellendichtrings mit der Drehachse L der Wellenanordnung 10 zusammen. Der Wellendichtring 18 liegt hier mit seinem Dichtabschnitt 24 an einer Gegenlauf- oder Dichtfläche **26** der Welle 12 dynamisch dichtend an. Der Halteabschnitt 20 ist in einer Haltenut **28** des Maschinenteils 14 angeordnet. Der Halteabschnitt 20 des Wellendichtrings 18 kann aus einem anderen Material als die Dichtlippe 22 bestehen. Das Material des Halteabschnitts 20 weist vorzugsweise ein im Vergleich zum Material der Dichtlippe 22 größeres Elastizitätsmodul auf. So kann der Halteabschnitt 20 beispielsweise Metall, einen, insbesondere zähelastisch verformbaren, Kunststoff oder ein Verbundwerkstoff umfassen bzw. aus einem dieser Materialien bestehen. Es versteht sich, dass der Wellendichtring auch einstückig, beispielsweise aus zähelastischem Kunststoff oder einem Elastomer, ausgeführt sein kann.

Der Wellendichtring 18 kann mit einem in Fig. 1 mit gestrichelter Linie dargestellten elastisch verformbaren Vorspannelement **30,** beispielsweise in Form einer Wurmfeder oder eines Elastomerrings, gegen die Dichtfläche 26 vorgespannt sein.

Der Dichtabschnitt 24 erstreckt sich im gezeigten Montagezustand entlang einer Dichtachse **D** des Wellendichtrings 18. Die Dichtachse D fällt bei dem hier als Radialwellendichtring ausgeführten Wellendichtring mit der Zentralachse Z des Wellendichtrings 18 zusammen. Ist der Wellendichtring 18 als ein Axialwellendichtring ausgeführt, so ist die Dichtfläche bzw. die Dichtachse D im Montagezustand orthogonal zur Zentralachse Z des Wellendichtrings sowie der Bewegungsachse L der beiden Maschinenteile 12, 14 verlaufend angeordnet.

Der Dichtabschnitt 24 umfasst gemäß Fig. 1 eine Lauffläche **32** und mehrere in der Lauffläche 32 angeordnete Profilrillen **34.** Die Profilrillen 34 dienen als Tribostrukturen und sind im Montagezustand in einer zur Dichtachse **D** axialen Richtung voneinander beabstandet angeordnet. Zu beachten ist, dass jede Profilrille 34 zur dynamischen Lauffläche 32 des Dichtabschnitts 24 und damit im Montagezustand in einer radialen Richtung zur Dichtfläche 26 der Welle 12 hin offen ausgeführt ist.

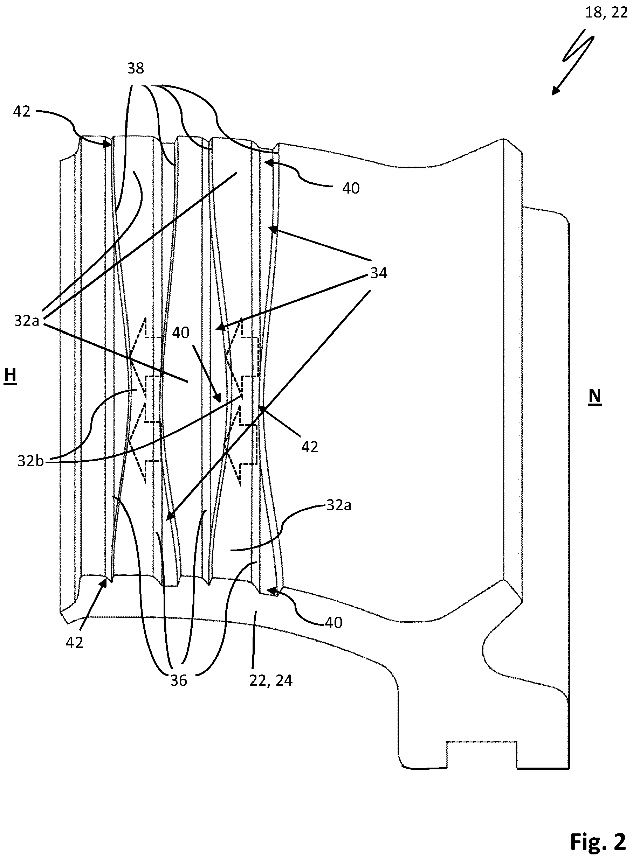

In **Fig. 2** ist der Dichtabschnitt 24 des Wellendichtrings 18 gemäß Fig. 1 in einem perspektivischen Detailausschnitt gezeigt.

Die Profilrillen 34 sind im Betriebseinsatz des Wellendichtrings 18 in einer axialen Richtung jeweils durch eine auf der Medien- bzw. Hochdruckseite H angeordnete, d. h. hochdruckseitige, erste Kanalwand/Seitenflanke **36** und durch eine auf der Außenseite N, d. h. niederdruckseitig, angeordnete zweite Kanalwand/Seitenflanke **38** seitlich begrenzt. Die Profilrillen 34 sind in axialer Richtung beiderseitig jeweils ringförmig umlaufend geschlossen ausgeführt. Mit anderen Worten weisen die Profilrillen 34 untereinander keine fluidischen Verbindungskanäle oder dergleichen auf.

Die hochdruckseitige erste Seitenflanke 36 der Profilrillen 34 weist jeweils einen in Umfangsrichtung geraden oder im Wesentlichen geraden Verlauf auf. Die niederdruckseitig angeordnete Seitenflanke 38 einer jeden Profilrille 34 weist demgegenüber in Umfangsrichtung des Wellendichtrings 18 jeweils einen wellenförmigen Verlauf auf. Dadurch weist jede Profilrille 34 in Umfangsrichtung abwechselnd jeweils Maxima **40** und Minima **42** ihres freien (= lichten) Strömungsquerschnitts für ein zum Schmieren der Kontaktzone zwischen Dichtabschnitt 24 und Dichtfläche 26 eingesetztes Schmiermittel auf.

Jedes Maximum 40 des Strömungsquerschnitts der Profilrillen 34 kann zumindest das Dreifache, insbesondere zumindest das Vierfache, der Minima 42 des Strömungsquerschnitts S betragen.

Die zweiten niederdruckseitigen Seitenflanken 38 erstrecken sich von jedem Maximum 40 beiderseitig bezüglich der ersten Seitenflanke 36 konkav gekrümmt axial in Richtung auf das nächstliegende Minimum 42. Die zweiten (niederdruckseitigen) Seitenflanken 38 sind hier in Umfangsrichtung insgesamt wellenförmig ausgeführt.

Die Maxima 40 und die Minima 42 der Strömungsquerschnitte S zweier in axialer Richtung unmittelbar aufeinanderfolgender Profilrillen 34 sind in Umfangsrichtung zueinander jeweils derart versetzt angeordnet, dass jede Verengung 42 einer Profilrille 34 axial in Richtung auf die Medien- bzw. Hochdruckseite H mit einem Maximum 40 der jeweils nächstliegend angeordneten Profilrille 34 fluchtet oder im Wesentlichen fluchtet. In dazu entsprechender Weise ist jedes Maximum 40 des Strömungsquerschnitts S einer Profilrille 34 in axialer Richtung zur Medien- bzw. Hochdruckseite H hin zu einem Minimum 42 der jeweils nächstliegend angeordneten Profilrille 34 fluchtend oder im Wesentlichen fluchtend angeordnet. Dadurch grenzen axial in Richtung der Medien- bzw. Hochdruckseite H Maxima 40 einer Profilrille 34 jeweils an ein breites Laufflächensegment **32a** und Verengungen 42 einer Profilrille 34 in dazu entsprechender Weise jeweils an ein schmales Laufflächensegment **32b** der Lauffläche 32 des Dichtabschnitts 24 an.

Zu beachten ist, dass derart über den Umfang des Wellendichtrings 18 an jedem lokalen Querschnitt des Dichtabschnitts ein einheitlich oder im Wesentlichen einheitlich großer Laufflächenabschnitt zur dynamisch dichtenden Anlage des Dichtabschnitts an der Dicht- bzw. Gegenlauffläche der Welle 12 bzw. des Maschinenteils 14 einer Wellenanordnung 10 gewährleistet ist. Dies ist für das Dichtvermögen des Wellendichtrings 18 von Vorteil.

Werden die Welle 12 und das Maschinenteil 14 um die Drehachse L relativ zueinander bewegt, so wird dadurch ein Rückfördereffekt des Wellendichtrings 18 bezüglich von auf die Niederdruckseite N bzw. zwischen den Dichtabschnitt 24 und die Dichtfläche 26 gelangtem Schmiermedium begünstigt. Das Schmiermedium wird - abgeleitet aus der relativen Rotationsbewegung der Welle 12 und dem Maschinenteil 14 und drehrichtungsunabhängig - in Umfangsrichtung entlang der Profilrille 34 in Richtung eines Minimums 42 des Strömungsquerschnitts S der jeweiligen Profilrille 34 gepresst. Unter Anströmen der axial in Richtung der Innender Medienseite H hin gebogen/gekrümmt verlaufenden zweiten Seitenflanken 38 wird das Schmiermedium gegen die Dichtfläche und gemäß den Pfeilen **A** axial in Richtung des Hochdruckbereichs H beschleunigt/gefördert und gelangt so in die medienseitig nächstliegende Profilrille 34 im Bereich des Maximums 40 ihres Strömungsquerschnitts S. Dadurch wird die Rückpumpfunktion des Wellendichtrings 18 axial in Richtung der Medien- oder Hochdruckseite H begünstigt. Zu beachten ist, dass der Wellendichtring 18 aufgrund der Ausformung der Profilrillen 34 drehrichtungsunabhängig eine Rückförderfunktion für in den Profilrillen 34 angeordnetes Schmiermedium ermöglicht ist.

Der Wellendichtring 18 bzw. die Dichtlippe 22 des Wellendichtrings 18 kann insbesondere ein gummi- oder zähelastisch verformbares Elastomermaterial, beispielsweise PTFE (Polytetrafluorethylen), umfassen oder aus diesem gebildet sein.

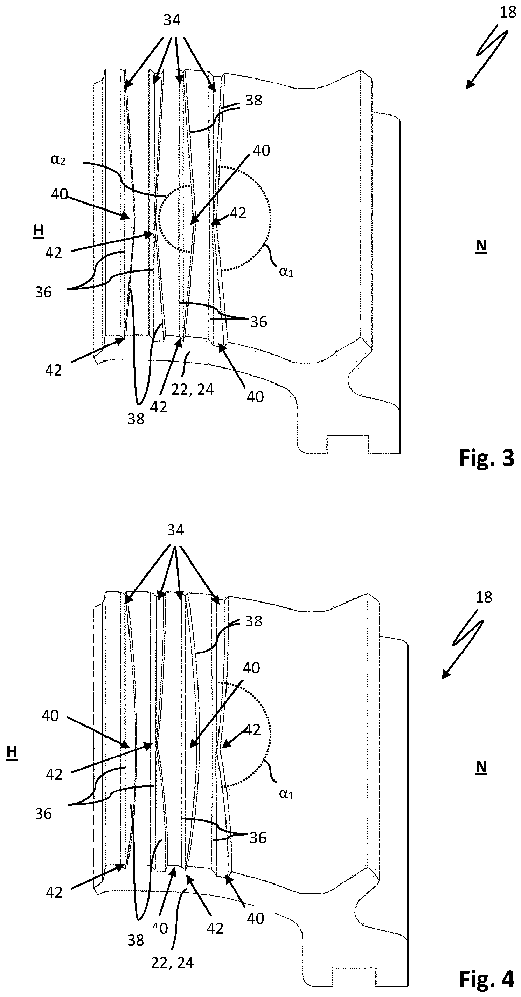

**Fig. 3** zeigt ein weiteres Ausführungsbeispiel eines Radial-Wellendichtrings 18. Die Profilrillen 34 sind auch hier am Dichtabschnitt 24 ringförmig umlaufend ausgeführt und weisen keine Unterbrechungen auf. Die zweiten Seitenflanken 38 der Profilrillen 34 weisen im Gegensatz zu dem in Fig. 2 gezeigten Ausführungsbeispiel keinen wellenförmigen Verlauf auf. Vielmehr erstrecken sich die zweiten Seitenflanken 38 von jedem Maximum 40 des Strömungsquerschnitts einer Profilrille 34 beiderseitig geradlinig zu den beiden jeweils nächstliegend angeordneten Minima 42 des Strömungsquerschnitts S der jeweiligen Profilrille 34. Im Bereich eines jeden Minimums 42 und eines jeden Maximums 40 bilden die zweiten Seitenflanken 38 jeweils einen stumpfen Winkel α₁, α₂ aus.

Die zweiten Seitenflanken 38 der Profilrillen 34 können von jedem Maximum 40 des Strömungsquerschnitts der jeweiligen Profilrille 34 zu den beiden nächstliegenden Minima 42 des Strömungsquerschnitts der Profilrille 34 auch jeweils gekrümmt verlaufend ausgeformt sein.

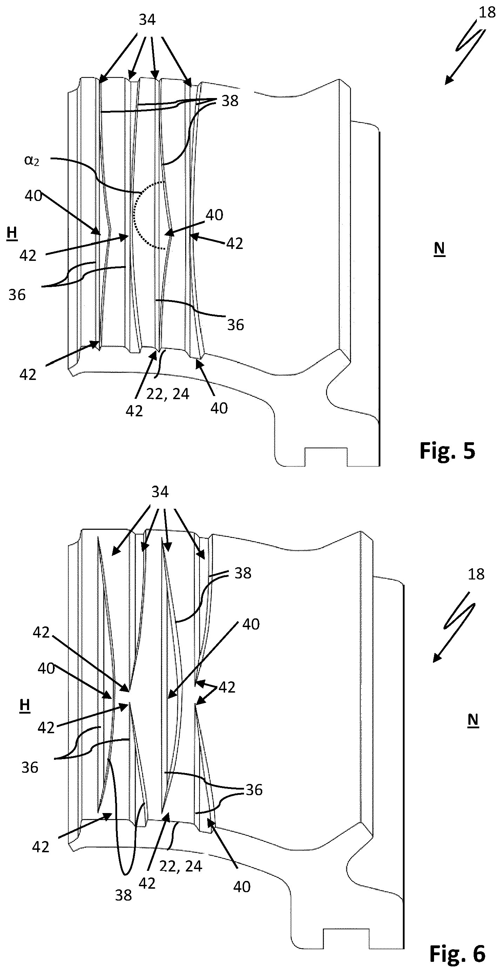

Bei dem in **Fig. 4** gezeigten Ausführungsbeispiel weisen die zweiten Seitenflanken 38 jeweils einen gegenüber der ersten Seitenflanke 36 konkaven Verlauf und gemäß dem in **Fig. 5** gezeigten Ausführungsbeispiel einen gegenüber der ersten Seitenflanke 36 der Profilrille 34 konvexen Verlauf auf. Die zweite Seitenflanke 38 ist im Bereich der Minima 42 des Strömungsquerschnitts der jeweiligen Profilrille 34 bogenförmig verlaufend ausgeführt. Durch einen gekrümmten Verlauf kann im Betriebseinsatz - je nach Drehrichtung der Welle 12 und des Maschinenteils 14 (Fig. 1) - eine verstärkte Beschleunigung des Schmiermediums in Richtung des jeweiligen Minimums/der Medienseite H erreicht werden. Dadurch kann im Bedarfsfall das Rückfördervermögen des Wellendichtrings 18 weiter gesteigert werden.

**Fig. 6** zeigt einen Detailausschnitt einer weiteren Ausführungsform eines Wellendichtrings 18. Hier sind die Profilrillen 34 in Umfangsrichtung des Wellendichtrings 18 jeweils vollständig unterbrochen bzw. segmentiert ausgeführt. Auch hier erstrecken sich die zweiten Seitenflanken 38 von jedem Maximum 40 des Strömungsquerschnitts der jeweiligen Profilrille 34 beiderseitig zum nächstliegenden Minimum 42 des Strömungsquerschnitts. Der Strömungsquerschnitt ist in jedem Minimum 42 Null. Die Minima 42 der Profilrillen 34 fluchten in einer zur Dichtachse D (Fig. 1) axialen Richtung im Wesentlichen mit einem Maximum 40 des Strömungsquerschnitts der in Richtung der Medienseite nächstliegenden Profilrille 34. Die zweiten Seitenflanken 38 der Profilrillen 34 können sich auch in einer zu Fig. 3 entsprechenden Weise geradlinig oder konvex gekrümmt zu den beiden jeweils nächstliegend angeordneten Minima 42 des Strömungsquerschnitts S der jeweiligen Profilrille 34 erstrecken.

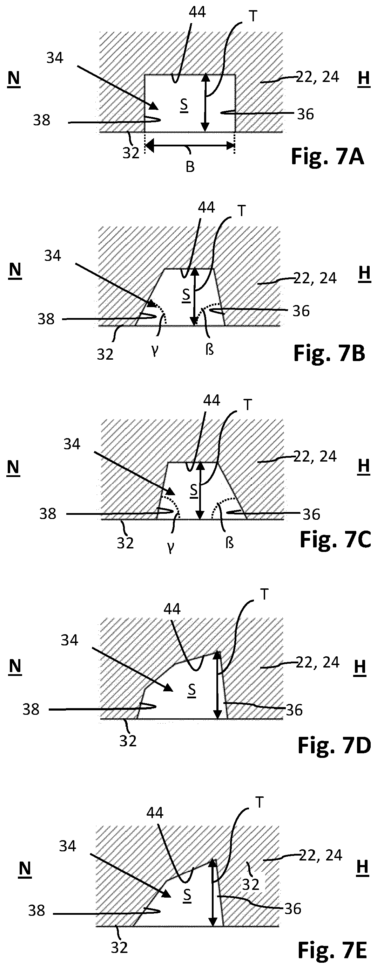

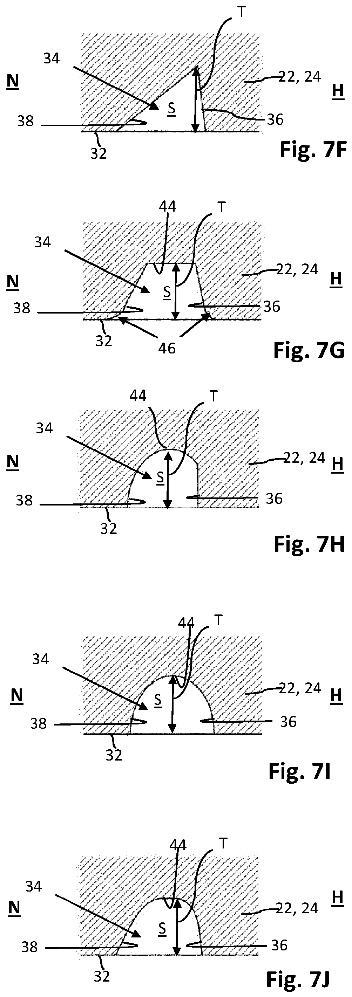

Zu beachten ist, dass die Profilrillen 34 des Wellendichtrings 18 unterschiedliche Geometrien ihres Strömungsquerschnitts S aufweisen können, auf die nachstehend unter Bezugnahme auf die Fign. 7 näher eingegangen wird.

Statt wie in den Fign. 2-6 in einer Ebene rechtwinklig zur Zentralachse Z können die Profilrillen 34 auch schräg bzw. verkippt zur Zentralachse Z verlaufen.

**Fig. 7A** zeigt einen Detailausschnitt einer rechteckig ausgeformten Profilrille 34 eines Dichtabschnitts 22 eines Wellendichtrings 18. Die erste und die zweite Seitenflanke 36, 38 sind zueinander parallel verlaufend ausgeführt und im Einbauzustand des Wellendichtrings 18 zur Dichtachse D orthogonal verlaufend angeordnet. Die Profilrille 34 weist ein Bodensegment **44** auf, das parallel zur Dichtachse D verlaufend angeordnet ist. Die Tiefe der Profilrille 34 ist mit T bezeichnet. Die Breite der Profilrille ist mit B bezeichnet.

Gemäß den **Fign. 7B** und **7C** kann sich die Profilrille 34 in Richtung ihrer Tiefenerstreckung verjüngen. Die beiden Seitenflanken 36, 38 können mit der Lauffläche 32 des Dichtabschnitts 24 zudem unterschiedliche Winkel β, γ einschließen. Gemäß Fig. 7B ist der Winkel γ der zweiten Seitenflanke 38 kleiner als der Winkel β der ersten Seitenflanke 36. Gemäß **Fig. 7C** ist der Winkel γ größer als der Winkel β.

Auch eine andere polygonale, beispielsweise 5-eckige Querschnittsgeometrie der Profilrille 34 ist möglich, wie dies in **Fig. 7D** gezeigt ist. Darüber hinaus kann eine Seitenflanke 36, 38 oder beide Seitenflanken 36, 38 der Profilrille 34 gemäß dem Ausführungsbeispiel 7D segmentiert sein, d.h. abgewinkelt ausgeführt sein, wie dies bei der zweiten Seitenflanke 38 gezeigt ist.

Das Bodensegment 44 der Profilrille 34 kann, beispielsweise gemäß Fig. 7D und **Fig. 7E****,** zur Lauffläche 32 schräg verlaufend angeordnet sein.

Gemäß **Fig. 7F** kann die Profilrille 34 auch eine dreieckige Querschnittsgeometrie aufweisen. In diesem Fall entfällt ein von den Seitenflanken 36, 38 abgrenzbares Bodensegment 44.

Gemäß **Fig. 7G** können eine oder die beiden Seitenflanken 36, 38 auch zumindest abschnittsweise gekrümmt ausgeführt sein und bedarfsweise mit der Lauffläche eine Phase **46** bilden, durch die ein Eintritt eines Schmiermittels in die Profilrille 34 begünstigt wird. Das Bodensegment 44 kann gemäß **Fig. 7H** gekrümmt ausgeführt sein und stufenfrei in eine der beiden Seitenflanken 36, 38 übergehen.

Gemäß **Fig. 7I** kann die Profilrille 34 insgesamt eine gerundete symmetrische Geometrie ihres Strömungsquerschnitts oder gemäß **Fig. 7J** eine gerundete asymmetrische Querschnittsgeometrie aufweisen.

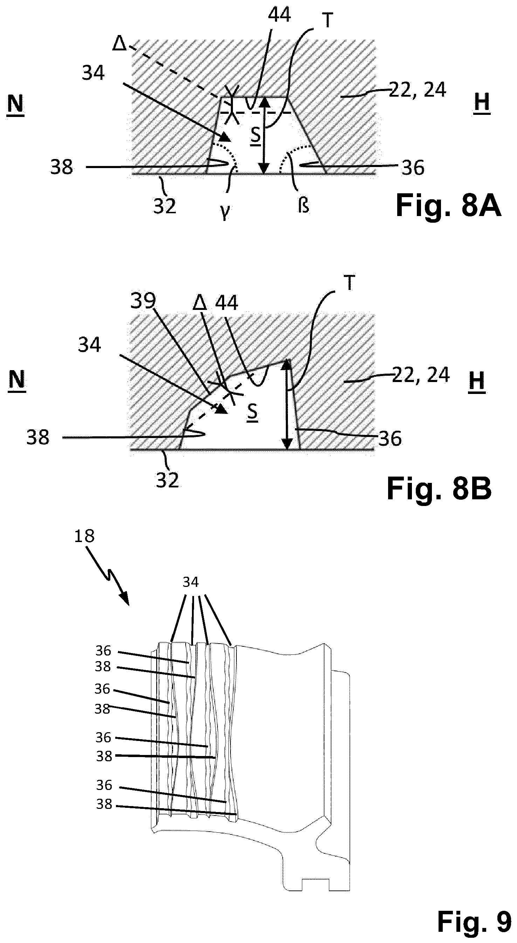

Wie in **Fig. 8A** am Ausführungsbeispiel von Fig. 7C gezeigt ist, kann die Nuttiefe T des Bodensegments 44, gesehen in Umfangsrichtung der Profilrille 34, periodisch um einen Betrag **Δ** variieren. Da der Winkel β der hochdruckseitigen Nutflanke 36 flacher als der Winkel γ der niederdruckseitigen Nutflanke 38 ist, führt die periodische Variation Δ der Nuttiefe T des Bodensegments 44 - insbesondere auch bei in Umfangsrichtung gleichbleibender Nutbreite der Profilrille 34 - zu einer Rückförderwirkung in Richtung zur Hochdruckseite H.

Wie in **Fig. 8B** am Ausführungsbeispiel von Fig. 7D gezeigt ist, kann der Flankenverlauf einer in Richtung auf die Hochdruckseite H bzw. auf die hochdruckseitige Nutflanke 36 gerichteten, hier schrägen, niederdruckseitigen Nutflanke **39** der Profilrille 34, gesehen in Umfangsrichtung der Profilrille 34, periodisch um einen Betrag Δ variieren. Die periodische Variation Δ des Flankenverlaufs der schrägen niederdruckseitigen Nutflanke 39 führt - insbesondere auch bei in Umfangsrichtung gleichbleibender Nutbreite der Profilrille 34 - aufgrund der in Richtung auf die Hochdruckseite H gerichteten Schrägstellung der niederdruckseitigen Nutflanke 39 zu einer Rückförderwirkung in Richtung zur Hochdruckseite H. Anstelle der schrägen Nutflanke 39 in Fig. 8B kann auch eine andere in Richtung auf die Hochdruckseite H bzw. auf die hochdruckseitige Nutflanke 36 gerichtete, niederdruckseitige Nutflanke, wie z.B. die gerundete niederdruckseitige Seitenflanke 38 der Fign. 7H bis 7J, einen Flankenverlauf aufweisen, der, gesehen in Umfangsrichtung der Profilrille 34, periodisch um einen Betrag Δ variiert.

Statt wie in Fign. 2-6 gerade kann die hochdruckseitige, erste Seitenflanke 36 der Profilrille 34, gesehen in Umfangsrichtung der Profilrille 34, auch axial moduliert sein. So ist in **Fig. 9** die erste Seitenflanke 36 wellen- bzw. sinusförmig förmig ausgeführt, und zwar in Umfangsrichtung der Profilrille 34 periodisch und mit gleicher Amplitude. Statt sinusförmig kann die axiale Amplitude der erste Seitenflanke 36 auch beliebig anders variiert sein. So können beispielsweise kleine "Überschwingungen" der Amplitude vorhanden sein, die in den Profilrillen 34 gezielt zu erzwungenen Verwirbelungen führen. Die Maximalamplitude der ersten Seitenflanke 36 ist kleiner als die halbe Maximalamplitude der zweiten Seitenflanke 38 und beträgt vorzugsweise weniger als ein Viertel der Maximalamplitude der zweiten Seitenflanke 38.

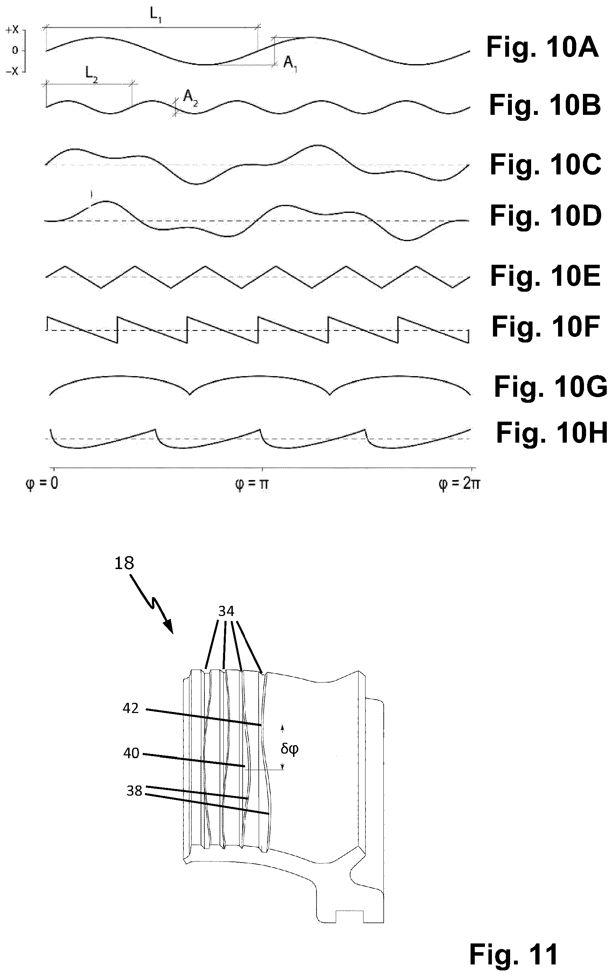

In **Fign. 10A-10H** sind verschiedene Varianten der ersten und/oder zweiten Seitenflanken 36, 38 gezeigt, wobei die Amplitude über dem Umfangswinkel **φ** der Welle 12 auftragen ist. Die Varianten sind verschiedene Funktionen, die - bezogen auf den Umfang der Welle 12 - n-periodisch sind, wobei n eine natürliche Zahl ist.

Fig. 10A zeigt einen sinusförmigen Verlauf mit ½-Periodenlänge (n=2).

Fig. 10B zeigt einen sinusförmigen Verlauf mit 1/5-Periodenlänge (n=5).

Fig. 10C zeigt einen aperiodischen Verlauf, der durch die Summe der in Fign. 10A und 10B gezeigten Verläufe gebildet ist.

Fig. 10D zeigt einen aperiodischen Verlauf, der durch die Differenz der in Fign.

10A und 10B gezeigten Verläufe gebildet ist.

Fig. 10E zeigt einen periodischen dreieckigen Verlauf (n=6).

Fig. 10F zeigt einen periodischen sägezahnförmigen Verlauf (n=6).

Fig. 10G zeigt einen periodischen, symmetrischen, bogenförmigen Verlauf (n=3).

Fig. 10H zeigt einen periodischen, asymmetrischen, bogenförmigen Verlauf (n=4).

Besonders vorteilhafte Ausführungsformen einer Profilrille 34 kombinieren Seitenflanken 36, 38 mit gleicher Periode oder solche, bei denen die Periode einer Seitenflanke 36, 38 ein Vielfaches der Periode der anderen Seitenflanke 36, 38 ist. Vorzugsweise sind über dem Umfang der Profilrille 34 möglichst viele Minima 42 des Strömungsquerschnitts einer Profilrille 34 zu möglichst vielen Maxima 40 der jeweils nächstliegenden Profilrille 34 fluchtend angeordnet.

Anders als in den Fign. 2-6, in denen die Maxima 40 und Minima 42 der Strömungsquerschnitte zweier benachbarter Profilrillen 34 axial fluchtend angeordnet sind, kann das Minimum 42 des Strömungsquerschnitts einer Profilrille 34 zum nächstliegenden Maximum 40 des Strömungsquerschnitts der nächstliegenden Profilrille 34 auch in Umfangsrichtung versetzt angeordnet sein, und zwar ausgehend von der fluchtenden Anordnung um maximal den halben Winkelabstand zwischen einem Minimum und einem benachbarten Maximum einer Profilrille 34. Der Versatz ermöglicht es, die Ausprägung der Rückförderwirkung zu beeinflussen. Besonders bevorzugt beträgt der Versatz ca. ¼ des Winkelabstands zwischen einem Minimum und einem benachbarten Maximum einer Profilrille 34. Eine fluchtende Anordnung des Minimums 42 des Strömungsquerschnitts einer Profilrille 34 zum nächstliegenden Maximum 40 der nächstliegenden Profilrille 34 entspricht einem Winkelversatz δφ von 0°. In **Fig. 11** hat das Minimum 42 des Strömungsquerschnitts einer Profilrille 34 einen Winkelversatz δφ von 90° zum nächstliegenden Maximum 40 des Strömungsquerschnitts der nächstliegenden Profilrille 34, was dem halben Winkelabstand zwischen einem Minimum 42 und einem benachbarten Maximum 40 der Profilrille 34 entspricht.

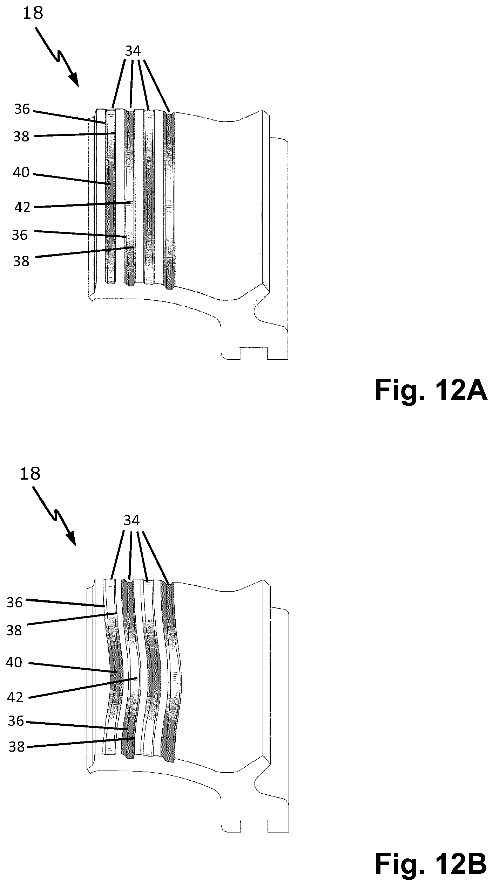

Von den Fign. 2-6 unterscheiden sich die in **Fign. 12A, 12B** gezeigten Ausführungsformen dadurch, dass hier die Profilrillen 34 gerade und parallel (Fig. 12A) und wellenförmig und parallel (Fig. 12B) nebeneinander verlaufen. Die Nuttiefe der Profilrillen 34 weist, gesehen in Umfangsrichtung der Profilrillen 34, periodisch jeweils abwechselnd Täler, also Maxima 40 des Strömungsquerschnitts der Profilrille 34, und Berge, also Minima 42 des Strömungsquerschnitts der Profilrille 34, auf. Diese periodische oder auch aperiodische Variation der Nuttiefe T führt - insbesondere auch bei in Umfangsrichtung gleichbleibender Nutbreite der Profilrille 34 - aufgrund einer flacheren, hochdruckseitigen Nutflanke (wie in Fig. 8A) und/oder aufgrund einer in Richtung auf die Hochdruckseite gerichteten Schrägstellung der niederdruckseitigen Nutflanke (wie in Fig. 8B) zu einer Rückförderwirkung in Richtung zur Hochdruckseite H.

## Patentansprüche

1. Wellendichtring (18) zum Abdichten einer Medienseite (H) gegenüber einer Außenseite (N) einer Wellenanordnung (10), mit einem Dichtabschnitt (24), der sich im Betriebszustand entlang einer Dichtachse (D) erstreckt und welcher eine Lauffläche (32) zur dynamischen dichtenden Anlage an einer Dichtfläche (26) eines Maschinenteils (12) der Wellenanordnung (10) aufweist,
wobei der Dichtabschnitt (24) mit mehreren Profilrillen (34) versehen ist, die in Richtung der Dichtachse voneinander beabstandet angeordnet und zur Lauffläche (32) hin jeweils offen ausgeführt sind,
wobei jede Profilrille (34) durch eine im Betriebseinsatz des Wellendichtrings (18) medienseitig angeordnete erste Seitenflanke (36) sowie durch eine im Betriebseinsatz umgebungsseitig angeordnete zweite Seitenflanke (38) seitlich begrenzt ist,
**dadurch gekennzeichnet, dass**
(a) die erste Seitenflanke (36) in Umfangsrichtung einen geraden oder im Wesentlichen geraden Verlauf aufweist, sich die zweite Seitenflanke (38) in Umfangsrichtung des Wellendichtrings (18) bidirektional von jedem Maximum des Strömungsquerschnitts (S) der Profilrille (34) axial in Richtung auf die erste Seitenflanke (36) zu einem Minimum (42) des Strömungsquerschnitts (S) erstreckt und jedes Minimum (42) einer Profilrille (34) zu einem Maximum (40) der jeweils nächstliegenden Profilrille (34) fluchtend oder im Wesentlichen fluchtend angeordnet ist, oder
(b) die Nuttiefe (T) der Profilrille (34) in Umfangsrichtung der Profilrille (34) variiert, um in der Profilrille (34) abwechselnd Maxima (40) und Minima (42) des Strömungsquerschnitts (S) auszubilden, und jedes Minimum (42) einer Profilrille (34) zu einem Maximum (40) der jeweils nächstliegenden Profilrille (34) fluchtend oder im Wesentlichen fluchtend angeordnet ist, oder
(c) zumindest ein Teil der Profilrillen (34) oder jede Profilrille (34) ringförmig geschlossen ausgeführt ist, der Flankenverlauf einer Nutflanke (39) der Profilrille (34) in Umfangsrichtung der Profilrille (34) variiert, um in der Profilrille (34) abwechselnd Maxima (40) und Minima (42) des Strömungsquerschnitts (S) auszubilden, und jedes Minimum (42) einer Profilrille (34) zu einem Maximum (40) der jeweils nächstliegenden Profilrille (34) fluchtend oder im Wesentlichen fluchtend angeordnet ist.

2. Wellendichtring (18) gemäß Anspruch 1, **dadurch gekennzeichnet, dass** in der Variante (a) oder (b) zumindest ein Teil der Profilrillen (34) oder jede Profilrille (34) ringförmig geschlossen ausgeführt ist.

3. Wellendichtring (18) gemäß Anspruch 1, **dadurch gekennzeichnet, dass** in der Variante (a) oder (b) zumindest ein Teil der Profilrillen (34) in Umfangsrichtung vollständig unterbrochen sind.

4. Wellendichtring (18) gemäß Anspruch 1 oder 2, **dadurch gekennzeichnet, dass** das Maximum (40) des Strömungsquerschnitts (S) zumindest zweimal, bevorzugt zumindest dreimal, ganz besonders bevorzugt zumindest viermal so groß ist wie das Minimum (42) des Strömungsquerschnitt (S).

5. Wellendichtring (18) gemäß einem der vorhergehenden Ansprüche, **dadurch gekennzeichnet, dass** sich die zweite Seitenflanke (38) beiderseitig eines jeden Maximums (40) des Strömungsquerschnitts (S) jeder Profilrille (34) oder eines Teils der Profilrillen (34) in Umfangsrichtung jeweils gerade oder konvex gekrümmt oder konkav gekrümmt axial in Richtung auf die erste Seitenflanke (36) zum jeweiligen Minimum (42) erstreckt.

6. Wellendichtring (18) gemäß einem der vorhergehenden Ansprüche, **dadurch gekennzeichnet, dass** zumindest ein Teil der Profilrillen (34) oder jede Profilrille (34) eine gerundete oder eine polygonale Geometrie ihres Strömungsquerschnitts (S) aufweist.

7. Wellendichtring (18) gemäß einem der vorhergehenden Ansprüche, **dadurch gekennzeichnet, dass** die erste und/oder die zweite Seitenflanke (36, 38) bezüglich der Dichtachse (D) des Wellendichtrings (18) zumindest abschnittsweise unterschiedliche Flankensteigungen (β, γ) aufweisen.

8. Wellendichtring (18) gemäß einem der vorhergehenden Ansprüche, **dadurch gekennzeichnet, dass** die medienseitige Seitenflanke (36) und die umgebungsseitige Seitenflanke (38) zumindest eines Teils der Profilrillen (34) oder aller Profilrillen (34) in einer radialen Richtung zur Dichtachse (D) hin konvergieren.

9. Wellendichtring (18) gemäß einem der vorhergehenden Ansprüche, **dadurch gekennzeichnet, dass** zumindest ein Teil der Profilrillen (34) oder alle Profilrillen (34) eine radiale Tiefe (T) aufweisen, die in Umfangsrichtung des Wellendichtrings (18) variiert, insbesondere in jedem Maximum (40) des Strömungsquerschnitts (S) größer ist als in einem Minimum (42) des Strömungsquerschnitts (S) der jeweiligen Profilrille (34).

10. Wellendichtring (18) gemäß einem der vorhergehenden Ansprüche, **dadurch gekennzeichnet, dass** ein zwischen einem Maximum (40) einer Profilrille (34) und dem Minimum (42) der jeweilig nächstliegenden Profilrille (34) angeordnetes Laufflächensegment (32b) medienbetätigt in einer radialen und/oder axialen Richtung relativ zum übrigen Wellendichtring (18) verformbar ist, um im Betriebseinsatz des Wellendichtrings (18) einen axial gerichteten Rücktransport des Mediums von der einen zur nächstliegenden Profilrille (34) zu vereinfachen.

11. Wellendichtring (18) gemäß einem der vorhergehenden Ansprüche, **dadurch gekennzeichnet, dass** der Dichtabschnitt (24) durch eine Dichtlippe (22) des Wellendichtrings (18) gebildet ist.

12. Wellendichtring (18) gemäß einem der vorhergehenden Ansprüche, **dadurch gekennzeichnet, dass** der Wellendichtring (18) zumindest abschnittsweise ein zähelastisch oder ein gummielastisch verformbares Polymermaterial umfasst oder aus diesem besteht.

13. Wellendichtring (18) gemäß einem der vorhergehenden Ansprüche, **dadurch gekennzeichnet, dass** der Wellendichtring (18) als ein Radialwellendichtring ausgeführt ist.

14. Wellendichtring (18) gemäß einem der vorhergehenden Ansprüche, **dadurch gekennzeichnet, dass** der im Wesentlichen gerade Verlauf der ersten Seitenflanke (36) in Umfangsrichtung eine axiale Modulation einschließt, deren Maximalamplitude kleiner als die halbe Maximalamplitude der zweiten Seitenflanke (38) ist, insbesondere kleiner als ein Viertel der Maximalamplitude der zweiten Seitenflanke (38) ist.

15. Wellendichtring (18) gemäß einem der vorhergehenden Ansprüche, **dadurch gekennzeichnet, dass** die im Wesentlichen fluchtende Anordnung eines Minimums (42) einer Profilrille (34) zu einem Maximum (40) der jeweils nächstliegenden Profilrille (34) einen Versatz in Umfangsrichtung von maximal dem halben Winkelabstand zwischen einem Minimum und einem benachbarten Maximum einer Profilrille (34) einschließt.

16. Wellendichtring (18) gemäß einem der vorhergehenden Ansprüche, **dadurch gekennzeichnet, dass** für den Fall, dass die Nuttiefe (T) der Profilrille (34) oder der Flankenverlauf einer Nutflanke (39) der Profilrille (34) in Umfangsrichtung der Profilrille (34) periodisch variiert, um in der Profilrille (34) abwechselnd Maxima (40) und Minima (42) des Strömungsquerschnitts (S) auszubilden, die Profilrillen (34) gerade und parallel nebeneinander verlaufen oder wellenförmig und parallel nebeneinander verlaufen.

17. Wellenanordnung (10), aufweisend ein erstes Maschinenteil in Form einer Welle (12) und ein die Welle (12) umgreifendes zweites Maschinenteil (14), die unter Ausbildung eines Dichtspalts (16) voneinander beabstandet angeordnet und um eine Drehachse (L) relativ zueinander verstellbar sind, sowie einen Wellendichtring (18) zum Abdichtung einer Medienseite (H) des Dichtspalts (16) gegenüber einer Außenseite (N) des Dichtspalts (16), wobei der Wellendichtring (18) gemäß einem der Ansprüche 1 bis 16 ausgebildet ist und mit seinem Dichtabschnitt (24) an einer Dichtfläche (26) des zweiten Maschinenteils (14) dynamisch dichtend anliegt.

## Claims

1. A shaft sealing ring (18) for sealing off a media side (H) from an outer side (N) of a shaft arrangement (10), comprising a sealing portion (24), which, in the operating state, extends along a sealing axis (D), and which has a running surface (32) for dynamic sealing contact with a sealing surface (26) of a machine part (12) of the shaft arrangement (10),
wherein the sealing portion (24) is provided with a plurality of profile grooves (34), which are arranged spaced apart in the direction of the sealing axis and are each open toward the running surface (32),
wherein each profile groove (34) is laterally delimited by a first lateral flank (36), which is arranged on the media side during operational use of the shaft sealing ring (18), and by a second lateral flank (38), which is arranged on the ambient side during operational use,
**characterized in that**
(a) the first lateral flank (36) has a straight or substantially straight course in the circumferential direction, the second lateral flank (38) extends bidirectionally in the circumferential direction of the shaft sealing ring (18) axially towards the first lateral flank (36) from each maximum of the flow cross section (S) of the profile groove (34) to a minimum (42) of the flow cross section (S), and each minimum (42) of a profile groove (34) is arranged in alignment or substantially in alignment with a maximum (40) of the respectively closest profile groove (34), or
(b) the groove depth (T) of the profile groove (34) varies in the circumferential direction of the profile groove (34) in order to form alternate maxima (40) and minima (42) of the flow cross section (S) in the profile groove (34), and each minimum (42) of a profile groove (34) is arranged in alignment or substantially in alignment with a maximum (40) of the respectively closest profile groove (34), or
(c) at least some of the profile grooves (34) or each profile groove (34) are/is in the form of a closed ring, the flank course of a groove flank (39) of the profile groove (34) varies in the circumferential direction of the profile groove (34) in order to form alternate maxima (40) and minima (42) of the flow cross section (S) in the profile groove (34), and each minimum (42) of a profile groove (34) is arranged in alignment or substantially in alignment with a maximum (40) of the respectively closest profile groove (34).

2. The shaft sealing ring (18) as claimed in claim 1, **characterized in that** in the variant (a) or (b), at least some of the profile grooves (34) or each profile groove (34) are/is in the form of a closed ring.

3. The shaft sealing ring (18) as claimed in claim 1, **characterized in that** in the variant (a) or (b), at least some of the profile grooves (34) are completely interrupted in the circumferential direction.

4. The shaft sealing ring (18) as claimed in claim 1 or 2, **characterized in that** the maximum (40) of the flow cross section (S) is at least twice, preferably at least three times, very particularly preferably at least four times, as great as the minimum (42) of the flow cross section (S).

5. The shaft sealing ring (18) as claimed in one of the preceding claims, **characterized in that**, on both sides of each maximum (40) of the flow cross section (S) of each profile groove (34) or of some of the profile grooves (34), the second lateral flank (38) extends in the circumferential direction in a straight line or in a convexly curved or concavely curved manner axially towards the first lateral flank (36) to the respective minimum (42).

6. The shaft sealing ring (18) as claimed in one of the preceding claims, **characterized in that** at least some of the profile grooves (34) or each profile groove (34) have/has a rounded or a polygonal geometry of its flow cross section (S).

7. The shaft sealing ring (18) as claimed in one of the preceding claims, **characterized in that** the first and/or the second lateral flank (36, 38) have/has at least in sections different flank gradients (β, γ) in relation to the sealing axis (D) of the shaft sealing ring (18).

8. The shaft sealing ring (18) as claimed in one of the preceding claims, **characterized in that** the media-side lateral flank (36) and the ambient-side lateral flank (38) of at least some of the profile grooves (34) or of all the profile grooves (34) converge toward the sealing axis (D) in a radial direction.

9. The shaft sealing ring (18) as claimed in one of the preceding claims, **characterized in that** at least some of the profile grooves (34) or all the profile grooves (34) have a radial depth (T) which varies in the circumferential direction of the shaft sealing ring (18), in particular which is greater at each maximum (40) of the flow cross section (S) than at a minimum (42) of the flow cross section (S) of the respective profile groove (34).

10. The shaft sealing ring (18) as claimed in one of the preceding claims, **characterized in that** a running surface segment (32b) arranged between a maximum (40) of a profile groove (34) and the minimum (42) of the respectively closest profile groove (34) can be deformed in a radial and/or axial direction relative to the rest of the shaft sealing ring (18) by actuating the medium in order to simplify axially directed reverse transport of the medium from one profile groove to the closest profile groove (34) during the operational use of the shaft sealing ring (18).

11. The shaft sealing ring (18) as claimed in one of the preceding claims, **characterized in that** the sealing portion (24) is formed by a sealing lip (22) of the shaft sealing ring (18).

12. The shaft sealing ring (18) as claimed in one of the preceding claims, **characterized in that** the shaft sealing ring (18) at least in sections comprises or consists of a polymer material that is tough-elastic or rubber-elastic in deformation.

13. The shaft sealing ring (18) as claimed in one of the preceding claims, **characterized in that** the shaft sealing ring (18) is a radial shaft sealing ring.

14. The shaft sealing ring (18) as claimed in one of the preceding claims, **characterized in that** the substantially straight course of the first lateral flank (36) includes an axial modulation in the circumferential direction, the maximum amplitude of which is less than half the maximum amplitude of the second lateral flank (38), in particular less than one quarter of the maximum amplitude of the second lateral flank (38).

15. The shaft sealing ring (18) as claimed in one of the preceding claims, **characterized in that** the substantially aligned arrangement of a minimum (42) of a profile groove (34) with a maximum (40) of the respectively closest profile groove (34) includes an offset in the circumferential direction of at most half of the angular spacing between a minimum and an adjacent maximum of a profile groove (34).

16. The shaft sealing ring (18) as claimed in one of the preceding claims, **characterized in that**, in the case where the groove depth (T) of the profile groove (34) or the flank course of a groove flank (39) of the profile groove (34) varies periodically in the circumferential direction of the profile groove (34) in order to form alternate maxima (40) and minima (42) of the flow cross section (S) in the profile groove (34), the profile grooves (34) run in a straight line and parallel next to one another or run in an undulating manner and parallel next to one another.

17. A shaft arrangement (10) comprising a first machine part in the form of a shaft (12) and a second machine part (14) surrounding the shaft (12), which are arranged spaced apart, forming a sealing gap (16), and can be adjusted relative to one another around an axis of rotation (L), and a shaft sealing ring (18) for sealing off a media side (H) of the sealing gap (16) from an outer side (N) of the sealing gap (16), wherein the shaft sealing ring (18) is designed in accordance with one of claims 1 to 16 and rests by means of its sealing portion (24) on a sealing surface (26) of the second machine part (14) with a dynamic sealing effect.

## Revendications

1. Bague d'étanchéité d'arbre (18) permettant de rendre étanche un côté milieu (H) par rapport à un côté extérieur (N) d'un ensemble formant arbre (10), avec une section d'étanchéité (24) qui s'étend en cours de fonctionnement le long d'un axe d'étanchéité (D) et qui présente une surface de glisse (32) permettant une mise en place, de manière à présenter une étanchéité dynamique, au niveau d'une surface d'étanchéité (26) d'une pièce de machine (12) de l'ensemble formant arbre (10),
la section d'étanchéité (24) étant munie de plusieurs sillons profilés (34) qui sont espacés les uns des autres dans la direction de l'axe d'étanchéité et qui sont respectivement ouverts vers la surface de glisse (32),
chaque sillon profilé (34) étant limité latéralement par un premier flanc latéral (36) agencé côté milieu lors de l'utilisation de la bague d'étanchéité d'arbre (18), et par un deuxième flanc latéral (38) agencé côté environnement lors de l'utilisation,
**caractérisée en ce que**
(a) le premier flanc latéral (36) présente un tracé droit ou essentiellement droit dans la direction circonférentielle, le deuxième flanc latéral (38) s'étend de manière bidirectionnelle dans la direction circonférentielle de la bague d'étanchéité d'arbre (18) depuis chaque maximum de la coupe transversale d'écoulement (S) du sillon profilé (34) de manière axiale en direction du premier flanc latéral (36) jusqu'à un minimum (42) de la coupe transversale d'écoulement (S) et chaque minimum (42) d'un sillon profilé (34) est agencé de manière alignée ou essentiellement alignée par rapport à un maximum (40) du sillon profilé (34) respectivement le plus proche, ou
(b) la profondeur de rainure (T) du sillon profilé (34) varie dans la direction circonférentielle du sillon profilé (34) pour former des maxima (40) et des minima (42) de la coupe transversale d'écoulement (S) de manière alternée dans le sillon profilé (34), et chaque minimum (42) d'un sillon profilé (34) est agencé de manière alignée ou essentiellement alignée par rapport à un maximum (40) du sillon profilé (34) le plus proche, ou
(c) au moins une partie des sillons profilés (34) ou chaque sillon profilé (34) est/sont réalisé(s) en forme de bague fermée, le tracé de flanc d'un flanc de rainure (39) du sillon profilé (34) varie dans la direction circonférentielle du sillon profilé (34) afin de former de manière alternée dans le sillon profilé (34) des maxima (40) et des minima (42) de la coupe transversale d'écoulement (S), et chaque minimum (42) d'un sillon profilé (34) est agencé de manière alignée ou essentiellement alignée par rapport à un maximum (40) du sillon profilé (34) le plus proche.

2. Bague d'étanchéité d'arbre (18) selon la revendication 1, **caractérisée en ce que** dans la variante (a) ou (b), au moins une partie des sillons profilés (34) ou chaque sillon profilé (34) est/sont réalisé(s) en forme de bague fermée.

3. Bague d'étanchéité d'arbre (18) selon la revendication 1, **caractérisée en ce que** dans la variante (a) ou (b), au moins une partie des sillons profilés (34) sont complètement interrompus dans la direction circonférentielle.

4. Bague d'étanchéité d'arbre (18) selon la revendication 1 ou 2, **caractérisée en ce que** le maximum (40) de la coupe transversale d'écoulement (S) est au moins deux fois, de manière préférée au moins trois fois, de manière particulièrement préférée au moins quatre fois plus grand que le minimum (42) de la coupe transversale d'écoulement (S).

5. Bague d'étanchéité d'arbre (18) selon l'une quelconque des revendications précédentes, **caractérisée en ce que** le deuxième flanc latéral (38), des deux côtés d'un maximum (40) respectif de la coupe transversale d'écoulement (S) de chaque sillon profilé (34) ou d'une partie des sillons profilés (34), s'étend par rapport au minimum (42) respectif de manière axiale en direction du premier flanc latéral (36) respectivement de manière rectiligne ou courbée de manière convexe ou courbée de manière concave dans la direction circonférentielle.

6. Bague d'étanchéité d'arbre (18) selon l'une quelconque des revendications précédentes, **caractérisée en ce que** la coupe transversale d'écoulement (S) d'au moins une partie des sillons profilés (34) ou chaque sillon profilé (34) présente une géométrie arrondie ou polygonale.

7. Bague d'étanchéité d'arbre (18) selon l'une quelconque des revendications précédentes, **caractérisée en ce que** le premier et/ou le deuxième flanc latéral (36, 38) présente(nt) au moins par sections des pentes de flanc (β, γ) différentes par rapport à l'axe d'étanchéité (D) de la bague d'étanchéité d'arbre (18).

8. Bague d'étanchéité d'arbre (18) selon l'une quelconque des revendications précédentes, **caractérisée en ce que** le flanc latéral (36) côté milieu et le flanc latéral (38) côté environnement d'au moins une partie des sillons profilés (34) ou de toutes les sillons profilés (34) convergent dans une direction radiale par rapport à l'axe d'étanchéité (D).

9. Bague d'étanchéité d'arbre (18) selon l'une quelconque des revendications précédentes, **caractérisée en ce qu'**au moins une partie des sillons profilés (34) ou tous les sillons profilés (34) présente(nt) une profondeur radiale (T) qui varie dans la direction circonférentielle de la bague d'étanchéité d'arbre (18), en particulier est plus grande dans chaque maximum (40) de la coupe transversale d'écoulement (S) que dans un minimum (42) de la coupe transversale d'écoulement (S) du sillon profilé (34) respectif.

10. Bague d'étanchéité d'arbre (18) selon l'une quelconque des revendications précédentes, **caractérisée en ce qu'**un segment de surface de glisse (32b) agencé entre un maximum (40) d'un sillon profilé (34) et le minimum (42) du sillon profilé (34) respectivement le plus proche peut être déformé du fait du milieu dans une direction radiale et/ou axiale par rapport au reste de la bague d'étanchéité d'arbre (18) afin de faciliter un retransport axial du milieu depuis un sillon profilé jusqu'au sillon profilé (34) le plus proche lors de l'utilisation de la bague d'étanchéité d'arbre (18).

11. Bague d'étanchéité d'arbre (18) selon l'une quelconque des revendications précédentes, **caractérisée en ce que** la section d'étanchéité (24) est formée par une lèvre d'étanchéité (22) de la bague d'étanchéité d'arbre (18).

12. Bague d'étanchéité d'arbre (18) selon l'une quelconque des revendications précédentes, **caractérisée en ce que** la bague d'étanchéité d'arbre (18) comprend ou est composée, au moins par sections, d'un matériau polymère déformable à viscoélasticité ou à élasticité de caoutchouc.

13. Bague d'étanchéité d'arbre (18) selon l'une quelconque des revendications précédentes, **caractérisée en ce que** la bague d'étanchéité d'arbre (18) est réalisée sous la forme d'une bague radiale d'étanchéité d'arbre.

14. Bague d'étanchéité d'arbre (18) selon l'une quelconque des revendications précédentes, **caractérisée en ce que** le tracé essentiellement droit du premier flanc latéral (36) dans la direction circonférentielle comprend une modulation axiale dont l'amplitude maximale est inférieure à la moitié de l'amplitude maximale du deuxième flanc latéral (38), en particulier inférieure au quart de l'amplitude maximale du deuxième flanc latéral (38).

15. Bague d'étanchéité d'arbre (18) selon l'une quelconque des revendications précédentes, **caractérisée en ce que** l'agencement essentiellement aligné d'un minimum (42) d'un sillon profilé (34) par rapport à un maximum (40) du sillon profilé (34) respectivement le plus proche comprend un décalage dans la direction circonférentielle d'au plus la moitié de la distance angulaire entre un minimum et un maximum adjacent d'un sillon profilé (34).

16. Bague d'étanchéité d'arbre (18) selon l'une quelconque des revendications précédentes, **caractérisée en ce que**, dans le cas où la profondeur de rainure (T) du sillon profilé (34) ou le tracé de flanc d'un flanc de rainure (39) du sillon profilé (34) varie périodiquement dans la direction circonférentielle du sillon profilé (34) afin de former de manière alternée des maxima (40) et des minima (42) de la coupe transversale d'écoulement (S) dans le sillon profilé (34), les sillons profilés (34) s'étendent les uns à côté des autres de manière droite et parallèle ou s'étendent les uns à côté des autres de manière ondulée et parallèle.

17. Ensemble formant arbre (10), comprenant une première pièce de machine sous la forme d'un arbre (12) et une deuxième pièce de machine (14) entourant l'arbre (12), qui sont agencées à distance les unes des autres avec formation d'un espace d'étanchéité (16) et peuvent être déplacées les unes par rapport aux autres autour d'un axe de rotation (L), et une bague d'étanchéité d'arbre (18) permettant de rendre étanche un côté milieu (H) de l'espace d'étanchéité (16) par rapport à un côté extérieur (N) de l'espace d'étanchéité (16), la bague d'étanchéité d'arbre (18) étant réalisée selon l'une quelconque des revendications 1 à 16 et sa section d'étanchéité (24) reposant, de manière à présenter une étanchéité dynamique, au niveau d'une surface d'étanchéité (26) de la deuxième pièce de machine (14).
